# EUROPÄISCHE PATENTSCHRIFT

(11) **EP 2 916 404 B1**
(45) Veröffentlichungstag und Bekanntmachung des Hinweises auf die Patenterteilung: **12.04.2017**
(21) Anmeldenummer: 14158285.8
(22) Anmeldetag: 07.03.2014
(51) Int. Cl.: H02G 1/02, H02G 1/04, H02G 7/00

(54) **Vorrichtung und Verfahren zur Positionierung von Flugwarnkugeln auf Leitungen, insbesondere auf Erdseilen von Hochspannungsleitungen**
Device and method for positioning flight warning balls on lines, in particular on the earth lines of high voltage power lines
Dispositif et procédé de positionnement de sphères d'avertissement aéronautique sur des lignes, notamment sur les câbles de terre des lignes à haute tension

(43) Veröffentlichungstag der Anmeldung: 09.09.2015
(73) Patentinhaber: LTB Leitungsbau GmbH, 01139 Dresden (DE)
(72) Erfinder: Horn, Hans-Erich, 09638 Lichtenberg (DE); Scheuner, Jens, 09638 Müdisdorf (DE); Petermann, Diemo, 09618 Brand-Erbisdorf (DE)
(74) Vertreter: Sperling, Thomas

(56) Entgegenhaltungen:
- EP-A1- 0 769 834
- WO-A1-96/02077
- DE-U- 7 519 442
- US-A- 4 163 480
- US-A- 4 422 528
- US-A1- 2002 153 148

## Beschreibung

Die Erfindung betrifft eine Vorrichtung zur Positionierung von Flugwarnkugeln auf Leitungen, insbesondere auf Erdseilen von Hochspannungsleitungen. Weiterhin betrifft die Erfindung ein Verfahren zur Positionierung, beziehungsweise zur Montage, und zur Demontage von Flugwarnkugeln auf Leitungen.

Flugwarnkugeln, welche auch als Luftkugeln oder Luftwarnkugeln bezeichnet werden, sind mit Abstand zueinander auf Überlandleitungen angeordnet, um Piloten von Hubschraubern oder Kleinflugzeugen visuell auf diese Leitungen, und insbesondere auf Hochspannungsleitungen als Gefahrenquelle aufmerksam zu machen. Die Flugwarnkugeln haben deshalb häufig auffällige kräftige Farben und es sind zumeist mehrere dieser Flugwarnkugeln auf den Erdseilen von Hochspannungsleitungen jeweils zwischen den Masten perlenkettenartig aufgereiht. Die Positionierung der Flugwarnkugeln auf den Leitungen erfolgt zumeist per bemanntem Seilfahrwagen, wenn das Seil dick und tragfähig genug ist und die darunterliegenden Freileitungssysteme freigeschaltet sind. Falls das Freileitungsseil sehr dünn oder vorgeschädigt ist, wird das Seil um eine Spannfeldlänge zurückgezogen und von den Masten aus mit Kugeln bestückt, in dem das Seil jeweils um den Abstand der Kugeln weitergezogen wird. Dies ist sehr aufwändig.
Steht die Leitung unter Spannung, ist ein Verlegen von Luftwarnkugeln mittels Seilfahrwagen nicht erlaubt. Ein weiterer Nachteil dieser Methode besteht darin, dass die Arbeiten in großer Höhe erfolgen und die Sicherungsmaßnahmen aufwändig und teuer sind.

Die Flugwarnkugeln besitzen einen Arretierungsmechanismus, welcher über einen Hebel ausgelöst wird. Der Hebel, auch als Arretierhebel bezeichnet, ragt in der Verlängerung der Flugwarnkugelachse aus dieser nach unten heraus.

Aus der WO 96/02077 A1 ist eine Flugwarnkugel bekannt, deren zwei Hälften über eine Spannschraube in einer Längsachse der Flugwarnkugel miteinander und mit dem Leitungsseil verspannt werden. Am unteren Ende der Spannschraube ist ein Ring angeordnet, welcher von unten gedreht und die Spannvorrichtung somit betätigt werden kann.

Im Stand der Technik sind weiterhin Leitungsfahrwagen, beispielsweise aus der DE 75 19 442 U, der US 4,163,480 A, der US 4,422,528 A und der US 5,901,435 A bekannt, welche an und entlang der Leitungen bewegt werden können, um Einsatzorte zwischen den Masten im Feld zu erreichen. Der Einsatz von bemannten Leitungsfahrwagen birgt allerdings immer ein Sicherheitsrisiko, so dass es Bestrebungen gibt, diese Einsätze zu minimieren.

Im Stand der Technik ist eine automatisierte Vorrichtung, beispielsweise nach der US 2002/0153148 A1, zur Positionierung von Flugwarnkugeln bekannt, welche als Roboter die Flugwarnkugel an die vorgesehene Position bringt und den Arretierungsmechanismus auslöst. Die Betätigung des Arretiermechanismus erfolgt über eine Schraubbewegung in einer senkrechten Achse der Flugwarnkugel.

Die Aufgabe der vorliegenden Erfindung besteht nunmehr darin, die technisch aufwändige und komplizierte Lösung eines Roboters zum automatisierten Positionieren von Flugwarnkugeln zu vereinfachen und eine betriebssichere und konstruktiv einfache Lösung für die Positionierung und Demontage von Luftwarnkugeln zur Verfügung zu stellen.

Die Aufgabe wird durch einen Gegenstand und ein Verfahren zur Montage sowie einem Verfahren zur Demontage von Flugwarnkugeln mit den Merkmalen gemäß der selbstständigen Patentansprüche gelöst. Weiterbildungen sind in den abhängigen Patentansprüchen angegeben.

Die Vorrichtung zur Positionierung von Flugwarnkugeln auf Leitungen, insbesondere auf Erdseilen von Hochspannungsleitungen, besteht im Wesentlichen aus einer an der Leitung verfahrbaren Laufkatze, an welcher Mittel zur Positionierung der Flugwarnkugel vorgesehen sind, die auch als Montagevorrichtung bezeichnet wird.
Die Flugwarnkugeln besitzen eine Arretiervorrichtung, die in montierter Position nach unten aus der Flugwarnkugel herausragt. Die aus der Flugwarnkugel herausragenden Teile der Arretiervorrichtung sind ein Arretierhebelansatz und ein an diesem drehbar gelagerten Arretierhebel, welcher eine Zughakeneingriffsöse an seinem distalen Ende aufweist. An der Laufkatze ist als Mittel zur Positionierung ein Vorschubanschlag zur Verschiebung der Flugwarnkugel durch Verfahren der Laufkatze auf der Leitung in einer Schubrichtung angeordnet. Weiterhin ist ein Fangarm zum Ziehen der Flugwarnkugel durch Verfahren der Laufkatze auf der Leitung in einer Zugrichtung vorgesehen, wobei Schub- und Zugrichtung entlang der Leitung aber gegensinnig orientiert sind. Ein Zughaken mit Eingriff in die Zughakeneingriffsöse ist zur Betätigung des Arretierhebels der Arretiervorrichtung der Flugwarnkugel vorgesehen, wobei der Zughaken über eine Spindel entlang derselben verfahrbar ausgebildet ist. Eine Betätigung des Arretierhebels durch den Zughaken ist gleichfalls möglich, auch wenn der Haken des Zughakens nicht in die Zughakeneingriffsöse eingreift. In dieser Position wird der Zughaken funktionsgemäß als Schubhaken eingesetzt.

Der Vorschubanschlag ist auf einer Seite unmittelbar an der Laufkatze angeordnet und schlägt auf der anderen Seite im Bereich des Seildurchtrittes durch die Flugwarnkugel an diese an. Der Seildurchtritt durch die Flugwarnkugel ist üblicherweise zentral auf der Linie des Durchmessers der Kugel beidseits ausgeführt.
Mittels des Vorschubanschlages schiebt die Vorrichtung die Flugwarnkugel in Vorschubrichtung vor sich her bis zu der gewünschten Position der Flugwarnkugel auf der Leitung.

Bevorzugt wird der Vorschubanschlag durch eine Distanzrolle zur gleichbleibenden Positionierung des Vorschubanschlages zum Seil geführt, um bei größeren Steigungen der Leitung ein Abwinkeln des Seiles an der äußeren Rolle der Laufkatze zu verhindern. Durch die Distanzrolle wird somit sichergestellt, dass die Leitung im Bereich der Laufkatze und der Flugwarnkugel eine gleiche, beziehungsweise annähernd gleiche Neigung besitzt.

Der Fangarm als ergänzendes Mittel der Positionierung der Flugwarnkugel auf der Leitung ist gleichfalls an der Laufkatze angeordnet und schlägt an der Flugwarnkugel nach unten herausragenden Arretierhebelansatz an. Der Fangarm weist Mittel zur temporären Fixierung des Arretierhebelansatzes auf, wodurch die Flugwarnkugel von der Laufkatze über den Fangarm in Zugrichtung bewegt werden kann.

Der Fangarm ist bevorzugt aus einem Schaft, einer Aufnahmeschiene für den Arretierhebelansatz und einer Klaue ausgebildet. Der Schaft ist nach einer Weiterbildung der Erfindung längenveränderlich ausgebildet, um eine Justierung der Länge gegebenenfalls durchzuführen. Die Aufnahmeschiene nimmt den Arretierhebelansatz auf und ist somit mit ihren Maßen auf diesen abgestimmt und weist weiterhin Mittel zur Fixierung des Arretierhebelansatzes in der Schiene auf.

Bevorzugt sind dazu eine Sperrklinke sowie eine Feder und ein Hubmagnet vorgesehen. Der Hubmagnet drückt die Sperrklinke entgegen der Federkraft der Feder zum Einführen des Arretierhebelansatzes in die Aufnahmeschiene zurück. Ist der Arretierhebelansatz in die Aufnahmeschiene eingefahren wird der Magnet ausgeschalten und die Feder drückt die Sperrklinke in die Ausgangsstellung zurück, wodurch der Arretierhebelansatz nicht mehr aus der Aufnahmeschiene herausgleiten kann.

Vorteilhaft wird die Spindel zum Verfahren des Zughakens über einen Motor antreibbar ausgebildet. Besonders bevorzugt sind die Laufkatze und/oder die Spindel elektromotorisch antreibbar ausgebildet. Eine bevorzugte Ausgestaltung besteht darin, dass an der Laufkatze ein Elektroenergiespeicher zum Betreiben der Motoren angeordnet ist, welcher mit der Laufkatze gemeinsam verfahrbar ist.

Der Elektroenergiespeicher ist bevorzugt über ein Gelenk an der Laufkatze hängend angeordnet und mit dieser verbunden.

Von besonderem Vorteil ist es, dass die Lage der Spindel zur Leitung konstruktionsbedingt im Wesentlichen parallel ist, sodass beispielsweise auch Leitungsabschnitte mittels der Vorrichtung befahren werden können, die nicht überwiegend horizontal sondern mit einer Neigung verlaufen. Dies ist besonders bei Leitungsabschnitten in der Nähe des Mastes vorteilhaft, da dort die Leitungen zum Teil sehr steil ansteigen.
Realisiert wird dies über einen Spindelhalter, der die Spindel in orthogonaler Richtung zum Seil parallel beabstandet, wobei der Spindelhalter an der Laufkatze angeordnet ist.

Besonders bevorzugt weist der Spindelhalter ein Gelenk auf, wodurch die Spindel definiert nach unten von der Flugwarnkugel wegklappbar ausgebildet ist. Dies ist insbesondere dann erforderlich, wenn der Arretierhebel mittels des Zughakens und der Spindel festgestellt wurde und der Zughaken nach einer Rückstellbewegung aus der Zughakeneingriffsöse herausfährt. In dem Moment, wo der Zughaken die Zughakeneingriffsöse freigibt klappt dann die Spindel mit dem unteren Teil des Spindelhalters weg und die Laufkatze kann sich von der arretierten Luftwarnkugel in Zugrichtung entfernen.

Nach einer besonders bevorzugten Ausgestaltung der Erfindung ist die Vorrichtung mit einer Fernsteuerung für die Bewegung der Laufkatze und die Bewegung der Spindel zur Positionierung des Zughakens vorgesehen.

Bevorzugt sind der Fangarm, der Vorschubanschlag sowie der Spindelhalter und die Spindel zu einem Modul, dem Montagegerät zusammengefasst, welches separat transportierbar und mit der Laufkatze vor Ort montierbar ist. Ebenso ist der Elektroenergiespeicher, auch als Akku bezeichnet, separat transportierbar, so dass die einzelnen Module oder Komponenten der Vorrichtung relativ leicht zum Einsatzort am Freileitungsmast befördert werden können.

Das erfindungsgemäße Verfahren zur Positionierung von Flugwarnkugeln erfolgt in folgenden Schritten:
Zunächst wird die Flugwarnkugel auf der Leitung in entarretierter Stellung des Arretierhebels positioniert. Danach wird die Laufkatze hinter der Flugwarnkugel angeordnet. Der Zughaken wird in die Zughakeneingriffsöse am Arretierhebel eingeführt und soll möglichst während des Transports der Flugwarnkugel in die vorgesehene Endposition in der Eingriffsöse verbleiben. Gleichzeitig wird der Arretierhebelansatz in die Aufnahmeschiene des Fangarmes eingeführt. Nunmehr wird die Laufkatze in Schubrichtung entlang der Leitung bewegt, wobei der Vorschubanschlag die Flugwarnkugel bis zur vorgesehenen Position vor sich herschiebt. Nach Erreichen der gewünschten Arretierposition der Flugwarnkugel wird der Zughaken mittels der Spindel in entgegengesetzte Richtung bewegt, sodass der Arretiermechanismus der Flugwarnkugel betätigt und die Flugwarnkugel auf der Leitung arretiert wird. Der Fangarm hält dabei die Flugwarnkugel in der vorgesehenen Position und bringt eine Gegenkraft für die Bewegung des Arretierhebels der Flugwarnkugel in der Arretierposition auf. Nach der Arretierung der Flugwarnkugel wird der Zughaken aus der Zughakeneingriffsöse des Arretierhebels mittels der Spindel in Schubrichtung herausgefahren, wobei die Spindel mit dem Zughaken aus dem Eingriffsbereich der Zughakeneingriffsöse herausschwenkt. Abschließend kann die Laufkatze mit der Montagevorrichtung zur Ausgangsposition zurückgefahren werden.

Das erfindungsgemäße Verfahren zur Demontage von Flugwarnkugeln von Leitungen erfolgt nunmehr dadurch, dass die Laufkatze in Schubrichtung an die Flugwarnkugel herangefahren wird. Der Arretierhebelansatz der Flugwarnkugel wird vom Fangarm eingefangen. Der Arretierhebelansatz der Flugwarnkugel wird dazu zunächst mittels der weit ausladenden Klaue vorpositioniert. Nachfolgend fährt der Arretierhebelansatz in die Aufnahmeschiene des Fangarmes ein, wobei sich die Sperrklinke entgegen der Federkraft öffnet. Nach dem Federkraft getriebenen Schließen der Sperrklinke wird die Arretierung der Flugwarnkugel auf der Leitung aufgehoben. Der Arretierhebel der Flugwarnkugel wird mittels des Zughakens und der Spindel je nach Ausgangslage in Schub- oder Zugrichtung bewegt und dabei entarretiert. Der Fangarm hält die Flugwarnkugel in der vorgesehenen Position und bringt eine Gegenkraft für die Bewegung des Arretierhebels zur Entarretierung der Flugwarnkugel auf. Nach der Entarretierung wird die Flugwarnkugel mit dem Fangarm bis zu einer geeigneten Demontageposition von der Laufkatze gezogen.

Besonders vorteilhaft an der erfindungsgemäßen Vorrichtung ist, dass diese aus überwiegend konstruktiv einfachen und wie im Falle der Laufkatze, der Spindel und des Spindelmotors aus handelsüblichen Teilkomponenten aufgebaut ist. Dadurch ist die Vorrichtung besonders kostengünstig herstellbar, was sich auf die Kosten für die Positionierung und Demontage der Flugwarnkugeln günstig auswirkt.
Eine weitere vorteilhafte Besonderheit der Vorrichtung besteht darin, dass diese aufgrund des Nachführens der Spindellage mit annähernder Parallelität zur Leitung in der Lage ist, auch in schwierigen Positionen, insbesondere in der Nähe der Masten, Flugwarnkugeln zu positionieren und zu demontieren. Dies ist möglich, da die Abweichung der Lage der Leitungen von der Horizontalen durch die Konstruktion des Fangarmes und dessen Ankopplung an die Laufkatze kompensiert werden.

Konzeptionsgemäß kann mit einer konstruktiv einfach zu realisierenden Spindelverschiebung des Zughakens kombiniert mit dem Einsatz des Fangarmes die fernsteuerbare Positionierung und Demontage von Flugwarnkugeln in jeder Richtung realisiert werden.
Somit kann bei vertretbarem Aufwand die Positionierung und Demontage ohne Montagepersonal an den jeweiligen Endpositionen der Luftwarnkugeln vorgenommen werden.
Die Vermeidung von Höheneinsätzen des Montagepersonals vermindert das Risiko von Arbeitsunfällen und die notwendigen Kosten dieser Einsätze. Dies ist besonders vorteilhaft, da die Erdseile, auf denen die Flugwarnkugeln überwiegend positioniert sind, wegen Blitzeinschlag empfindlich in Bezug auf Schwächungen und Vorschädigungen sind und somit ein Befahren dieser Leitungen sicherheitstechnisch immer als kritisch einzustufen ist.
Weiterhin sind diese Leitungen überwiegend als Einfachseil ausgeführt, so dass beim Reißen eines Einfachseiles sicherheitstechnisch ein großes Problem bei der Befahrung dieses Seiles vorliegt, da keine doppelte Sicherheit gewährleistet werden kann.
Weiterhin ist ein Vorteil dieser Methode darin zu sehen, dass die Kugeln unter Spannung verlegbar sind und der betreffende Leitungsabschnitt nicht vom Netz genommen werden muss. Dies ist möglich, da keine Arbeitskräfte oberhalb spannungsführender Leitungen das Erdseil befahren müssen.
Weiterhin vorteilhaft ist, dass die Flugwarnkugeln in der vorgeschlagenen Weise beidseitig montierbar sind, was zu einer Verringerung des Aufwandes führt. Ebenso ist es möglich, dass durch die Vorrichtung auf dem geschädigtem Seil eine Raupenbildung eher überwunden werden kann als bei einer Befahrung. Auch sind alle Kugeln in der gleichen Richtung ausrichtbar, weil die Vorrichtung in jeder Richtung montieren und demontieren kann.
Im Vergleich zu bekannten Lösungen, welche mit Saugnäpfen zur Fixierung und zum Transport der Flugwarnkugelarbeiten ausgestattet sind, ist mit der angegebenen Vorrichtung eine sichere mechanische Lösung, die konstruktiv einfach und robust ausgeführt ist, möglich.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Vorrichtung zur Positionierung und Demontage von Flugwarnkugeln und
- Fig. 2:: Fangarm der Vorrichtung.

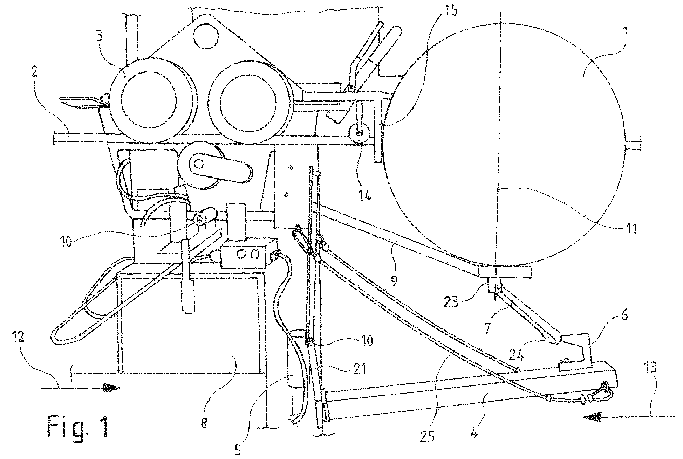

In Figur 1 ist eine Vorrichtung zur Positionierung von Flugwarnkugeln 1 dargestellt. Der Begriff der Positionierung umfasst hierbei das Ausbringen der Flugwarnkugel 1 auf eine vorgegebene Position auf der Leitung 2 sowie auch das Einholen oder Demontieren einer Flugwarnkugel 1 von einer beliebigen Position auf der Leitung 2 und den Transport zum Mast, wo die Flugwarnkugel 1 dann von der Leitung 2 entfernt oder ausgewechselt werden kann. Die Flugwarnkugel 1 umschließt üblicherweise eine Leitung 2 entlang ihres Durchmessers. In den überwiegenden Anwendungsfällen ist die Leitung 2 das Erdseil einer Hochspannungsleitung. Die Flugwarnkugel 1 hat eine senkrecht zur Leitung 2 liegende Flugwarnkugelachse 11. Eine Arretiervorrichtung für die Arretierung der Flugwarnkugel 1 an der Leitung 2 ist im Wesentlichen im inneren der Flugwarnkugel 1 ausgebildet. Ein Arretierhebelansatz 23 mit daran angeordnetem Arretierhebel 7 ragt nach unten aus der Flugwarnkugel 1 heraus. Der Arretierhebel 7 ist in der gemäß Figur 1 dargestellten Ausführungsform abgewinkelt zur Richtung der Flugwarnkugelachse 11 positioniert, sodass sich die Flugwarnkugel 1 in entarretiertem, in Bezug auf die Leitung 2 beweglichen Zustand befindet. Auf der Leitung 2 ist die Laufkatze 3 verfahrbar angeordnet. Zum elektromotorischen Antrieb der Laufkatze 3 ist ein Elektroenergiespeicher 8 als Akkumulator- oder Batteriepack Teil der verfahrbaren Vorrichtung. Der Elektroenergiespeicher 8 dient neben dem Antrieb zum Verfahren der Laufkatze 3 auch dem Antrieb der Spindel 4. Der Energiespeicher 8 versorgt somit sowohl die Laufkatze 3 als auch den Motor 5 zur Verstellung der Spindel 4 mit elektrischer Energie. Der Elektroenergiespeicher 8 ist in der dargestellten Ausgestaltung über ein Gelenke 10 an die Laufkatze 3 angehängt.
Als Mittel zur Positionierung der Flugwarnkugel 1 ist mit der Laufkatze 3 ein Vorschubanschlag 15, ein Fangarm 9 und eine Spindel 4 mit Spindelhalter 21 verbunden.
Der Vorschubanschlag 15 schlägt an der Flugwarnkugel 1 im Bereich des Durchtrittes der Leitung 2 durch die Flugwarnkugel 1 an diese an und dient zum Schieben der Flugwarnkugel 1 entlang der Leitung 2 in Schubrichtung 12. Zur Verbesserung der Position ist eine Distanzrolle 14 für den Seilabstand an dem Vorschubanschlag 15 angeordnet.
Die Spindel 4 und der Motor 5 sind an einem Spindelhalter 21 angeordnet, welcher die Spindel parallel nach unten zur Leitung 2 beabstandet.
Über die Bewegung der Spindel 4 wird der von der Spindel 4 geführte Zughaken 6 translatorisch entlang der Spindel 4 bewegt. Der Zughaken 6 ist durch die Zughakeneingriffsöse 24 des Arretierhebels 7 der Flugwarnkugel 1 durchführt. Greift nun der Zughaken 6 in die Zughakeneingriffsöse 24 ein und wird der Zughaken 6 mittels der Spindel 4 im Wesentlichen entlang der Leitung 2 bewegt, so wird der Arretierhebel 7 in Richtung der Flugwarnkugelachse 11 geklappt und betätigt damit die Arretierung der Flugwarnkugel 1 auf der Leitung 2.

An der Laufkatze 3 ist weiterhin ein Fangarm 9 ausgebildet, welcher den Arretierhebelansatz 23 an der Flugwarnkugel 1 aufnehm- und fixierbar ausgeführt ist. Während des Ausbringens der Flugwarnkugel 1 durch Bewegung in Schubrichtung 12 wird diese durch den Fangarm 9 auf der Unterseite positioniert und fixiert. Beim Einholen der Flugwarnkugel 1 durch Bewegung in Zugrichtung 13 wird diese mittels des Fangarmes 9 gezogen.

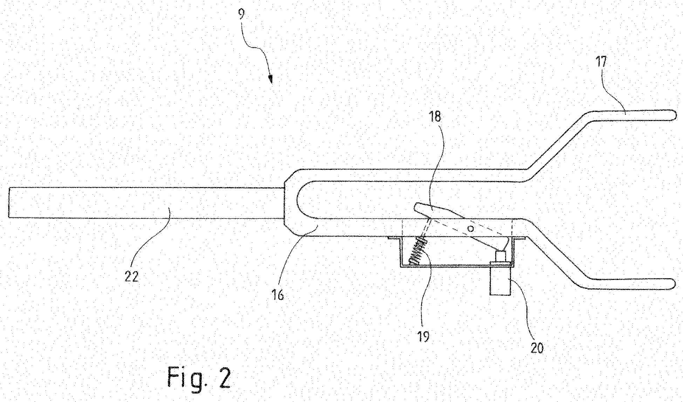

In Figur 2 ist die konstruktive Ausgestaltung des Fangarmes 9 beispielhaft dargestellt. Der Fangarm 9 besteht aus einem gegebenenfalls teleskopisch verlängerbaren Schaft 22 und einer Aufnahmeschiene 16 für den Arretierhebelansatz 23. Die Beabstandung der beiden Schenkel der Aufnahmeschiene 16 ist folglich derart dimensioniert, dass der Arretierhebelansatz 23 mit leichtem Spiel von der Aufnahmeschiene 16 in Längsrichtung aufgenommen werden kann. Die Aufnahmeschiene 16 geht in einen erweiterten Aufnahmebereich mit großem Spiel für den Arretierhebelansatz 23 über, der als Klaue 17 bezeichnet ist.
Im Bereich der Aufnahmeschiene 16 ist gemäß der dargestellten Ausführungsform eine Sperrklinke 18 angeordnet, welche die Aufnahmeschiene 16 zur Klaue 17 hin begrenzt. Die Sperrklinke 18 wird mittels einer Feder 19 in eine Schließstellung für den Aufnahmebereich der Aufnahmeschiene 16 gedrückt. Läuft eine Flugwarnkugel 1 mit ihrem Arretierhebelansatz 23 in den Bereich der Klaue 17 und nachfolgend in den Aufnahmebereich der Aufnahmeschiene 16 ein, so kann diese die Sperrklinke 18 aufdrücken und diese passieren. Nach dem Passieren der Sperrklinke 18 wird diese durch die Feder 19 wieder in die Schließstellung gedrückt und der Arretierhebelansatz 23 kann den Aufnahmebereich der Aufnahmeschiene 16 nicht wieder verlassen. Soll der Arretierhebelansatz 23 freigegeben werden, so zieht ferngesteuert der Hubmagnet 20 an und drückt die Sperrklinke 18 entgegen der Federkraft der Feder 19 auf, so dass der Arretierhebelansatz 23 aus der Aufnahmeschiene 16 in den Bereich der Klaue 17 herausfahren kann.

Das Verfahren zur Positionierung, beziehungsweise Montage und Demontage, von Flugwarnkugeln 1 wird nachfolgend anhand eines Ausführungsbeispieles beschrieben.
Zur Montage der Flugwarnkugel 1 wird diese zuerst auf dem zu bestückenden Seil der Freileitung, beziehungsweise allgemein der Leitung 2, aufgesteckt. Die Flugwarnkugel 1 sollte vorerst mittels Arretierhebel 7 oder Kugel 1 oder durch eine Leine gesichert werden, damit ein selbstständiges und unkontrolliertes Abgleiten bei schräger Seillage vermieden wird.
Nun kann die Laufkatze 3 auf dem Seil und die Montagevorrichtung mit dem Vorschubanschlag 15, dem Fangarm 9 und der Spindel 4 daran montiert werden. Ist der Elektroenergiespeicher 8 separat zum Montageort befördert worden, ist dieser an der Laufkatze 3 einzuhängen. Die elektrischen Verbindungen sind verwechslungssicher ausgeführt und sind entsprechend zu verbinden. Die Flugwarnkugel 1 wird nun an die Montageeinheit mit Hand soweit herangezogen, so dass sie sich am Anschlag für das Schieben befindet, wobei die Flugwarnkugel 1 im Bereich des Seildurchtrittes am Vorschubanschlag 15 anschlägt. Dabei ist die Flugwarnkugel 1 gleichzeitig in den Fangarm 9 eingefahren und durch die federnde Sperre, der Sperrklinke 18, am Herausrutschen gehindert. Diese Sicherung ist vorteilhaft, so dass nicht bei unerwünschter Fahrtrichtungsumkehr vor Erreichen des Zielortes zum vorzeitigen Verankern der Flugwarnkugel 1 kommt. Derart gesichert wird die Flugwarnkugel mittels der Vorrichtung zum Einsatzort geschoben. Durch die Distanzrolle 14 am Vorschubanschlag 15 wird die Zugriffshöhe des Fangarmes 9 auf den Arretierhebelansatz 23 unterhalb der Flugwarnkugel 1 gesichert. Gleichzeitig wird durch die Distanzrolle 14 auch der Angriffsbereich des Vorschubanschlages 15 und die Position der Spindel 4 gesichert. Die Spindel 4 mit dem Zughaken 6 kann nun in die Zughakeneingriffsöse 24 des Arretierungshebels 7 eingeführt werden. Der Zugaken 6 wird mittels der elektromotorisch angetriebenen Spindel 4 in die entsprechende Position gebracht. Die Wahl, ob das Arretieren der Flugwarnkugel 1 durch Schub oder Zug des Arretierhebels 7 erfolgen soll, ist abhängig von der Lage der Flugwarnkugel 1 und prinzipiell frei wählbar. Der Zughaken 6, der dementsprechend in umgekehrter Positionierung als Schubhaken funktionieren kann, ist entsprechend einzurichten. Dazu ist der drehbar ausgeführte Zugaken 6 beispielsweise mittels einer Schraube zu lösen und um 180° zu drehen.
Die Spindel 4 ist durch ein Gelenk 10 mit Knickpunkt unterhalb der Unterkante der Flugwarnkugel 1 so ausgelegt, dass sie unabhängig von der Seillage, wie beispielsweise bei Berg- oder Talfahrt der Montageeinrichtung, sicher aus der montierten Flugwarnkugel 1 herausfahren kann.
Der Zughaken 6 kann mittels Spindel 4 zurückgefahren werden, bis er aus der Zughakeneingriffsöse 24 herausrutscht. Die Fangseile 25 dienen dem Auffangen der nach dem Herausgleiten des Zughakens 6 aus der Zughakeneingriffsöse 24 herabschwenkenden Spindel 4.
Die elektrische Steuerung besitzt eine Vorortschaltung und eine Fernsteuermöglichkeit. Ist die Flugwarnkugel 1 am Montagezielort angekommen, wird diese mittels Verfahren des Zughakens 6 in der gewünschten Position verankert.
Zur Freigabe der Montageeinheit vor dem Zurückfahren muss die Sperrklinke 18 mittels Fernsteuersignal die Ausfahrt aus dem Fangarm 9 so lange freigeben, bis die Laufkatze 3 in Zugrichtung zurückgefahren ist und sich die Sperrklinke 18 nicht mehr einklinken kann. Die Montageeinheit kann nun an ihren Ausgangsort zurückkehren.
Zum Demontieren des gleichen Flugwarnkugeltyps muss die Spindel 4 im Winkel zum Seil so mittels definierter Fangbänderlänge eingestellt werden, dass der Zughaken 6 im ausgefahrenen Zustand unter dem Arretierhebel 7 durchfahren kann oder zum Aufschieben in den Arretierhebel 7 einfahren kann. Ist die Laufkatze 3 an die Flugwarnkugel 1 herangefahren und der Vorschubanschlag 15 bündig mit der Flugwarnkugel 1, so hat gleichzeitig der Fangarm 9 den Arretierhebelansatz 23 unterhalb der Flugwarnkugel 1 erreicht. Durch das Einrasten der Sperrklinke 18 wird die Flugwarnkugel 1 für den Rücktransport in Zugrichtung erfasst und gesichert. Der Zug- oder Schubhaken kann nun je nach Vorwahl betätigt werden und öffnet den Arretiermechanismus der Flugwarnkugel 1.
Ist die zu demontierende Flugwarnkugel 1 durch Umwelteinflüsse mit dem Seil verklebt oder verkeilt, kann durch kurzes Hin- und Herfahren der Laufkatze 3 die Flugwarnkugel 1 losgerissen werden.
Um ein Verkeilen der Gleitschienen der Flugwarnkugel 1 mit dem Seil zu vermeiden, kann der Zughaken 6 wieder ein Stück zurückgefahren werden. Die Sperrklinke 18 übernimmt jetzt das Festhalten der Flugwarnkugel 1 und die Rückfahrt der Flugwarnkugel 1 kann erfolgen.

### Bezugszeichenliste

- 1: Flugwarnkugel
- 2: Erdseil, Leitung
- 3: Laufkatze
- 4: Spindel
- 5: Motor
- 6: Zughaken
- 7: Arretierhebel
- 8: Elektroenergiespeicher
- 9: Fangarm
- 10: Gelenk
- 11: Flugwarnkugelachse
- 12: Schubrichtung
- 13: Zugrichtung
- 14: Distanzrolle für Seilabstand
- 15: Vorschubanschlag
- 16: Aufnahmeschiene
- 17: Klaue
- 18: Sperrklinke
- 19: Feder
- 20: Hubmagnet
- 21: Spindelhalter
- 22: Schaft
- 23: Arretierhebelansatz
- 24: Zughakeneingriffsöse
- 25: Fangseile

## Patentansprüche

1. Vorrichtung zur Positionierung von Flugwarnkugeln (1) auf Leitungen (2), insbesondere auf Erdseilen von Hochspannungsleitungen, wobei die Flugwarnkugeln (1) eine Arretiervorrichtung aus einem Arretierhebelansatz (23) und einem Arretierhebel (7) mit Zughakeneingriffsöse (24) aufweisen und dass, eine an der Leitung (2) verfahrbare Laufkatze (3) mit einer Montagevorrichtung vorgesehen ist, wobei die Montagevorrichtung einen Vorschubanschlag (15) zur Verschiebung der Flugwarnkugel (1) durch Verfahren der Laufkatze (3) auf der Leitung (2) in einer Schubrichtung (12) entlang der Leitung (2), einen Fangarm (9) zum Ziehen der Flugwarnkugel (1) durch Verfahren der Laufkatze (3) auf der Leitung (2) in einer Zugrichtung (13) entlang der Leitung (2) aufweist, **dadurch gekennzeichnet, dass** eine Spindel (4) mit Zughaken (6) vorgesehen ist, wobei der Zughaken (6) zur Betätigung des Arretierhebels (7) über die Spindel (4) und entlang derselben verfahrbar ausgebildet ist und dass der Fangarm (9) den Arretierhebelansatz (23) an der Flugwarnkugel (1) aufnehm- und fixierbar ausgeführt ist.

2. Vorrichtung nach Anspruch 1, **dadurch gekennzeichnet, dass** der Vorschubanschlag (15) an der Laufkatze (3) angeordnet ist und an die Flugwarnkugel (1) im Bereich des Seildurchtrittes durch die Flugwarnkugel (1) anschlägt.

3. Vorrichtung nach Anspruch 2, **dadurch gekennzeichnet, dass** der Vorschubanschlag (15) eine Distanzrolle (14) zur gleichbleibenden Positionierung des Vorschubanschlages (15) zum Seil (2) aufweist.

4. Vorrichtung nach einem der Ansprüche 1 bis 3, **dadurch gekennzeichnet, dass** der Fangarm (9) an der Laufkatze (3) angeordnet ist und an der Flugwarnkugel (1) am Arretierhebelansatz (23) anschlägt.

5. Vorrichtung nach einem der Ansprüche 1 bis 4, **dadurch gekennzeichnet, dass** der Fangarm (9) aus einem Schaft (22), einer Aufnahmeschiene (16) für den Arretierhebelansatz (23) und einer Klaue (17) ausgebildet ist und dass Mittel zur Fixierung des Arretierhebelansatzes (23) in der Aufnahmeschiene (16) vorgesehen sind.

6. Vorrichtung nach Anspruch 5, **dadurch gekennzeichnet, dass** als Mittel zur Fixierung des Arretierhebelansatzes (23) in der Aufnahmeschiene (16) eine Sperrklinke (18) sowie eine Feder (19) und ein Hubmagnet (20) vorgesehen sind.

7. Vorrichtung nach einem der Ansprüche 1 bis 6, **dadurch gekennzeichnet, dass** die Laufkatze (3) und/oder die Spindel (4) elektromotorisch antreibbar ausgebildet sind.

8. Vorrichtung nach Anspruch 7, **dadurch gekennzeichnet, dass** an der Laufkatze (3) und mit dieser verfahrbar ein Elektroenergiespeicher (8) angeordnet ist.

9. Vorrichtung nach Anspruch 8, **dadurch gekennzeichnet, dass** der Elektroenergiespeicher (8) über ein Gelenk (10) mit der Laufkatze (3) hängend verbunden ist.

10. Vorrichtung nach einem der Ansprüche 1 bis 9, **dadurch gekennzeichnet, dass** die Spindel (4) parallel zur Leitung (2) angeordnet ist.

11. Vorrichtung nach einem der Ansprüche 1 bis 10, **dadurch gekennzeichnet, dass** die Spindel (4) über einen Spindelhalter (21) in orthogonaler Richtung zur Leitung (2) beabstandet ist, wobei der Spindelhalter (21) an der Laufkatze (3) angeordnet ist.

12. Vorrichtung nach Anspruch 11, **dadurch gekennzeichnet, dass** der Spindelhalter (21) ein Gelenk (10) aufweist, wodurch die Spindel (4) definiert nach unten von der Flugwarnkugel (1) wegklappbar ausgebildet ist.

13. Vorrichtung nach einem der Ansprüche 1 bis 12, **dadurch gekennzeichnet, dass** eine Fernsteuerung für die Bewegung der Laufkatze (3) und der Spindel (4) zur Positionierung des Zughakens (6) vorgesehen ist.

14. Verfahren zur Positionierung von Flugwarnkugeln (1) auf Leitungen (2) mit einer Vorrichtung nach einem der Ansprüche 1 bis 13, bei dem
- die Flugwarnkugel (1) auf der Leitung (2) in entarretierter Stellung des Arretierhebels (7) aufgesteckt wird,
- die Laufkatze (3) mit der Montagevorrichtung hinter der Flugwarnkugel (1) positioniert wird,
- der Zughaken (6) in die Zughakeneingriffsöse (24) am Arretierhebel (7) und der Arretierhebelansatz (23) in die Aufnahmeschiene (16) des Fangarmes (9) eingeführt wird,
- die Laufkatze (3) in Schubrichtung (12) entlang der Leitung (2) bewegt wird, wobei der Vorschubanschlag (15) die Flugwarnkugel (1) bis zur vorgesehenen Position auf der Leitung (2) schiebt, **dadurch gekennzeichnet, dass** danach
- der Zughaken (6) mittels der Spindel (4) in entgegengesetzte Richtung bewegt und die Flugwarnkugel (1) auf der Leitung (2) durch Auslösen des Arretiermechanismus der Flugwarnkugel (1) arretiert wird, wobei der Fangarm (9) die Flugwarnkugel (1) in der vorgesehenen Position hält und eine Gegenkraft für die Bewegung des Arretierhebels (7) der Flugwarnkugel (1) in die Arretierposition aufbringt und dass
- nach der Arretierung der Flugwarnkugel (1) der Zughaken (6) in Schubrichtung (12) aus der Zughakeneingriffsöse (24) des Arretierhebels (7) mittels der Spindel (4) herausgefahren wird, wobei die Spindel (4) mit dem Zughaken (6) aus dem Eingriffsbereich der Zughakeneingriffsöse (24) herausschwenkt und dass die Laufkatze (3) zur Ausgangsposition zurückgefahren wird.

15. Verfahren zur Demontage von Flugwarnkugeln (1) von Leitungen (2), mit einer Vorrichtung nach einem der Ansprüche 1 bis 13, bei dem
- die Laufkatze (3) in Schubrichtung (12) an die Flugwarnkugel (1) herangefahren wird,
**dadurch gekennzeichnet, dass**
- der Arretierhebelansatz (23) der Flugwarnkugel (1) in die Klaue (17) und nachfolgend in die Aufnahmeschiene (16) des Fangarmes (9) bei geöffneter Sperrklinke (18) eingefahren wird,
- die Sperrklinke (18) geschlossen wird,
- der Arretierhebel (7) mittels des Zughakens (6) und der Spindel (4) in Zug- oder Schubrichtung (13, 12) entarretiert wird,
wobei der Fangarm (9) die Flugwarnkugel (1) in der vorgesehenen Position hält und eine Gegenkraft für die Bewegung des Arretierhebels (7) zur Entarretierung der Flugwarnkugel (1) aufbringt und dass
- nach der Entarretierung die Flugwarnkugel (1) mit dem Fangarm (9) in Zugrichtung (13) bis zu einer geeigneten Demontageposition von der Laufkatze (3) gezogen wird.

## Claims

1. Device for the positioning of aviation warning balls (1) on lines (2), in particular on overhead earth wires of high-voltage power lines, whereby the aviation warning balls (1) have a locking device consisting of a locking lever attachment (23) and a locking lever (7) with an engagement loop (24) for a draw-hook and that a travelling trolley (3) that can be moved on the line (2) is equipped with a mounting device, whereby the mounting device has a feed stop (15) for shifting the aviation warning ball (1), through movement of the travelling trolley (3) on the line (2), in a 'push' direction (12) along the line (2), a catching arm (9) for pulling the aviation warning ball (1), through movement of the travelling trolley (3) on the line (2), in a 'pull' direction (13) along the line (2), **characterised in that** a spindle (4) with a draw-hook (6) is provided, whereby the draw-hook (6), for operation of the locking lever (7), is designed so as to be moveable over the spindle (4) and along the same and that the catching arm (9) is designed so as to be able to accommodate and fix the locking lever attachment (23) on the aviation warning ball (1).

2. Device in accordance with Claim 1, **characterised in that** the feed stop (15) is arranged on the travelling trolley (3) and comes up against the aviation warning ball (1) in the area where the wire passes through the aviation warning ball (1).

3. Device in accordance with Claim 2, **characterised in that** the feed stop (15) has a spacing roller (14) for ensuring that the positioning of the feed stop (15) in relation to the wire (2) remains the same.

4. Device in accordance with one of Claims 1 to 3, **characterised in that** the catching arm (9) is arranged on the travelling trolley (3) and comes up against the aviation warning ball (1) on the locking lever attachment (23).

5. Device in accordance with one of Claims 1 to 4, **characterised in that** the catching arm (9) is formed from a shaft (22), a support rail (16) for the locking lever attachment (23) and a jaw (17) and that devices are provided for fixing the locking lever attachment (23) in the support rail (16).

6. Device in accordance with Claim 5, **characterised in that** a ratchet (18) and a spring (19) and a lifting magnet (20) are provided as devices for fixing the locking lever attachment (23) in the support rail.

7. Device in accordance with one of Claims 1 to 6, **characterised in that** the travelling trolley (3) and/or the spindle (4) are designed to be driveable by means of an electric motor.

8. Device in accordance with Claim 7, **characterised in that** an electrical energy store (8) is arranged on the travelling trolley (3) and is moveable with it.

9. Device in accordance with Claim 8, **characterised in that** the electrical energy store (8) is connected to the travelling trolley (3) in a suspended manner by means of a hinge (10).

10. Device in accordance with one of Claims 1 to 9, **characterised in that** the spindle (4) is arranged parallel to the line (2).

11. Device in accordance with one of Claims 1 to 10, **characterised in that** the spindle (4) is - via a spindle holder (21) - at a distance from and in an orthogonal direction in relation to the line (2), whereby the spindle holder (21) is arranged on the travelling trolley (3).

12. Device in accordance with Claim 11, **characterised in that** the spindle holder (21) has a hinge (10), by which means the spindle (4) is designed so as to be capable of being folded downwards in a defined manner away from the aviation warning ball (1).

13. Device in accordance with one of Claims 1 to 12, **characterised in that** a remote control is provided for the movement of the travelling trolley (3) and the spindle (4) for the positioning of the draw-hook (6).

14. Method for the positioning of aviation warning balls (1) on lines (2) with a device in accordance with one of Claims 1 to 13, in which
- the aviation warning ball (1) is attached to the line (2) in an unlocked position of the locking lever (7),
- the travelling trolley (3) with the mounting device is positioned behind the aviation warning ball (1),
- the draw-hook (6) is inserted into the draw-hook engagement loop (24) on the locking lever (7) and the locking lever attachment (23) is inserted into the support rail (16) of the catching arm (9),
- the travelling trolley (3) is moved in a 'push' direction (12) along the line (2), whereby the feed stop (15) pushes the aviation warning ball (1) up to the envisaged position on the line (2)
**characterised in that** afterwards
- the draw-hook (6) is moved by means of the spindle (4) in the opposing direction and the aviation warning ball (1) is locked in place on the line (2) through the triggering of the locking device of the aviation warning ball (1), whereby the catching arm (9) holds the aviation warning ball (1) in the envisaged position and provides an opposing force for the movement of the locking lever (7) of the aviation warning ball (1) into the locking position and that
- after the locking (in place) of the aviation warning ball (1), the draw-hook (6) is moved out in a 'push' direction (12) out of the draw-hook engagement loop (24) of the locking lever (7) by means of the spindle (4), whereby the spindle (4) is swung out with the draw-hook (6) out of the engagement zone of the draw-hook engagement loop (24) and that the travelling trolley (3) is driven back into the starting position.

15. Method for the removal of aviation warning balls (1) from lines (2), with a device in accordance with one of Claims 1 to 13, in which
- the travelling trolley (3) is driven in a 'push' direction (12) up to the aviation warning ball (1),
**characterised in that**
- the locking lever attachment (23) of the aviation warning ball (1) is brought into the jaw (17) and subsequently into the support rail (16) of the catching arm (9) with the ratchet (18) open,
- the ratchet (18) is closed,
- the locking lever (7) is unlocked by means of the draw-hook (6) and the spindle (4) in a 'pull' or 'push' direction (13, 12), whereby the catching arm (9) holds the aviation warning ball (1) in the envisaged position and provides an opposing force for the movement of the locking lever (7) for releasing the aviation warning ball (1) and that
- after the release the aviation warning ball (1) is pulled with the catching arm (9) in a 'pull' direction (13) up until a suitable removal position of the travelling trolley (3).

## Revendications

1. Dispositif de positionnement de balises diurnes sphériques (1) sur câble (2), en particulier sur câbles de garde de lignes à haute tension, dans lequel la balise diurne sphérique (1) présente un dispositif de blocage composé d'un support de levier de blocage (23) et d'un levier de blocage (7) avec oeillet d'accrochage (24) pour le crochet de traction (6) et qui prévoit un dispositif de montage pour un chariot mobile (3) sur le câble, le dispositif de montage étant équipé d'une butée de progression (15) pour le déplacement de la balise diurne sphérique (1) par le processus du chariot (3) sur le câble (2) dans le sens de la poussée (12) le long du câble (2), d'un bras (9) pour tirer la balise diurne sphérique (1) par le processus du chariot (3) sur le câble (2) dans le sens de la traction (13) le long du câble (2), dispositif de positionnement **caractérisé en ce qu'**une broche (4) est dotée d'un crochet de traction (6), le crochet de traction (6) pour l'actionnement du levier de blocage (7) étant mobile via la broche (4) et le long de cette dernière, et **en ce que** le bras (9) est conçu pour être placé et fixé au support de levier de blocage (23) sur la balise diurne sphérique.

2. Dispositif selon la revendication 1, **caractérisé en ce que** la butée de progression (15) est installée sur le chariot (3) et apposée contre la balise diurne sphérique (1), au niveau du passage du câble au travers de la balise diurne sphérique (1).

3. Dispositif selon la revendication 2, **caractérisé en ce que** la butée de progression (15) est équipé d'une douille d'écartement (14) pour maintenir un positionnement toujours égal de la butée de progression (15) par rapport au câble (2).

4. Dispositif selon l'une quelconque des revendications 1 à 3, **caractérisé en ce que** le bras (9) est installé sur le chariot (3) et apposé contre la balise diurne sphérique (1) au niveau du support du levier de blocage (23).

5. Dispositif selon l'une quelconque des revendications 1 à 4, **caractérisé en ce que** le bras (9) se compose d'un manche (22), d'un rail d'insertion (16) pour le support du levier de blocage (23) et d'une mâchoire (17) et **en ce que** des moyens de fixation du support du levier de blocage (23) sont prévus dans le rail d'insertion (16).

6. Dispositif selon la revendication 5, **caractérisé en ce que** les moyens de fixation du support du levier de blocage (23) dans le rail d'insertion (16) sont équipés d'un cliquet (18), d'un ressort (19) et d'un électro-aimant de levage (20).

7. Dispositif selon l'une quelconque des revendications 1 à 6, **caractérisé en ce que** le chariot (3) et/ou la broche (4) sont conçus pour être entraînés par un moteur électrique.

8. Dispositif selon la revendication 7, **caractérisé en ce que** le chariot (3) est équipé d'un accumulateur électrique (8) se déplaçant avec lui.

9. Dispositif selon la revendication 8, **caractérisé en ce que** l'accumulateur électrique (8) est relié par une pièce mobile (10) au chariot (3), auquel il est suspendu.

10. Dispositif selon l'une quelconque des revendications 1 à 9, **caractérisé en ce que** la broche (4) est disposée parallèlement au câble (2).

11. Dispositif selon l'une quelconque des revendications 1 à 10, **caractérisé en ce que** la broche (4) est espacée du câble (2) perpendiculairement, via un support de broche (21) fixé sur le chariot (3).

12. Dispositif selon la revendication 11, **caractérisé en ce que** le support de la broche (21) présente une pièce mobile (10), au moyen de laquelle la broche (4), définissant un trajet vers le bas de la balise diurne sphérique (1), est rabattable.

13. Dispositif selon l'une quelconque des revendications 1 à 12, **caractérisé en ce qu'**une commande à distance est prévue pour le déplacement du chariot (3) et de la broche (4) pour le positionnement du crochet de traction (6).

14. Procédé de positionnement de balises diurnes sphériques (1) sur des câbles (2) à l'aide d'un dispositif selon l'une quelconque des revendications 1 à 13, par lequel
- la balise diurne sphérique (1) est enfichée sur le câble (2) alors que le levier de blocage (7) est en position débloquée.
- le chariot (3), avec le dispositif d'installation, est positionné derrière la balise diurne sphérique (1),
- le crochet de traction (6) est inséré dans l'oeillet d'accrochage (24) au niveau du levier de blocage (7) et le support du levier de blocage (23) est inséré dans le rail d'insertion (16) du bras (9),
- le chariot (3) se déplace dans le sens de la poussée (12) le long du câble (2), la butée de progression (15) poussant la balise diurne sphérique (1) jusqu'à la position prévue sur le câble (2) et **caractérisé en ce que** par la suite,
- le crochet de traction (6) se déplace dans la direction opposée au moyen de la broche (4) et bloque la balise diurne sphérique (1) sur le câble en déclenchant le mécanisme de blocage, le bras (9) maintenant la balise diurne sphérique dans la position prévue et appliquant une force antagoniste pour le déplacement du levier de blocage (7) de la balise diurne sphérique (1) en position de blocage et **en ce que**
- après le blocage de la balise diurne sphérique (1), le crochet de traction (6) dans la direction de la poussée (12) est extrait de l'oeillet d'accrochage (24) du levier de blocage (7) à l'aide de la broche (4), la broche (4) avec le crochet de traction (6) étant actionnée pour sortir de la zone d'accroche de l'oeillet d'accrochage (24) et **en ce que** le chariot (3) revient à sa position de départ.

15. Procédé de démontage de balises diurnes sphériques (1) sur des câbles (2) à l'aide d'un dispositif selon l'une quelconque des revendications 1 à 13, par lequel
- le chariot (3) est rapproché de la balise diurne sphérique (1) dans le sens de la poussée (12),
**caractérisé en ce que**
- le support du levier de blocage (23) de la balise diurne sphérique (1) est inséré dans la mâchoire (17), puis dans le rail d'insertion (16) du bras (9) lorsque le cliquet (18) est ouvert,
- le cliquet (18) se ferme,
- le levier de blocage (7) se débloque à l'aide du crochet de traction (6) et de la broche (4) dans le sens de la traction ou de la poussée (13, 12), le bras (9) maintenant la balise diurne sphérique (1) dans la position prévue et appliquant une force contraire pour déplacer le levier de blocage (7) et débloquer la balise diurne sphérique (1) et **en ce que**
- une fois débloquée, la balise diurne sphérique (1) est acheminée avec le bras (9) dans le sens de la traction (13) jusqu'à une position adaptée au démontage du chariot (3).
